# EUROPEAN PATENT APPLICATION

(11) **EP 4 507 028 A1**
(43) Date of publication of application: **12.02.2025**
(21) Application number: 22960353.5
(22) Date of filing: 30.09.2022
(51) Int. Cl.: H01M 4/36, H01M 4/583, H01M 10/0525

(54) **NEGATIVE ELECTRODE ACTIVE MATERIAL AND PREPARATION METHOD THEREFOR, SECONDARY BATTERY AND ELECTRIC DEVICE**

(71) Applicant: Contemporary Amperex Technology Co., Limited, Ningde, Fujian 352100 (CN)
(72) Inventor: ZENG, Chen, Ningde, Fujian 352100 (CN); KANG, Meng, Ningde, Fujian 352100 (CN); HE, Libing, Ningde, Fujian 352100 (CN)
(74) Representative: Kraus & Lederer PartGmbB
(86) International application number: PCT/CN2022/123417
(87) International publication number: WO 2024/065737

(57) **Abstract**

This application relates to a negative electrode active material. The negative electrode active material includes a core structure and a shell structure disposed around surface of the core structure, the core structure and the shell structure both have pores, and an average pore size of pores in the shell structure is greater than an average pore size of pores in the core structure. The negative electrode active material of this application can provide excellent kinetic performance under the condition of high compacted density. When used in a battery, this negative electrode active material can increase the energy density of the battery and achieve the objective of fast charging. This application further relates to a preparation method of the foregoing negative electrode active material, a secondary battery, and an electric apparatus.

## Description

### TECHNICAL FIELD

This application pertains to the field of secondary battery technologies, and specifically relates to a negative electrode active material, a preparation method thereof, a secondary battery, and an electric apparatus.

### BACKGROUND

Secondary batteries are now widely used in fields such as battery electric vehicles, hybrid electric vehicles, and smart grids. With the continuous development of the new energy industry, customers have placed higher requirements for the use of secondary batteries.

Current research of negative electrode active materials focuses more on how to improve their energy density. Compacted density is one of the reference measures of the energy density. Existing negative electrode active materials cannot provide excellent kinetic performance under the condition of high compacted density.

### SUMMARY

In view of the problem mentioned in BACKGROUND, this application provides a negative electrode active material, which can provide excellent kinetic performance under the condition of high compacted density.

According to a first aspect of this application, a negative electrode active material is provided and includes a core structure and a shell structure disposed around surface of the core structure. The core structure and the shell structure both have pores, and an average pore size of pores in the shell structure is greater than an average pore size of pores in the core structure.

In the technical solution according to this embodiment of this application, the core structure with a smaller average pore size is wrapped in the shell structure with a greater average pore size, so that the negative electrode active material has a gradient pore structure. Such a pore structure design can shorten the transport path of lithium ions and reduce the time required for lithium ions to reach the surface of graphite, thereby providing the negative electrode active material with excellent kinetic performance and improving the wettability of the negative electrode active material in the electrolyte. In addition, the negative electrode active material with a gradient pore structure also has a high compacted density. Therefore, the negative electrode active material can provide excellent kinetic performance under the condition of high compacted density. When used in a battery, this negative electrode active material can increase the energy density of the battery and achieve the objective of fast charging.

In some embodiments, a first example of the first aspect is proposed, where the average pore size of pores in the shell structure is denoted as D 1 and the average pore size of pores in the core structure is denoted as D2, and D1/D2 ≥ 4, optionally, 20 ≤ D1/D2 ≤ 50.

When D1/D2 satisfies the foregoing relation, it helps shorten the transport path of lithium ions and reduces the time required for the lithium ions to reach the surface of graphite. This provides the negative electrode active material with excellent kinetic performance, improves the wettability of the negative electrode active material in the electrolyte, and guarantees a high compacted density.

In some embodiments, a second example of the first aspect is proposed, where the average pore size of pores in the shell structure is 100 nm-1000 nm, optionally 200 nm-500 nm; and/or the average pore size of pores in the core structure is 10 nm-100 nm, optionally 20 nm-50 nm.

Optimizing the average pore sizes of the shell structure and the core structure helps improve the kinetic performance of the negative electrode active material and guarantee a higher compacted density. If the average pore size is excessively large, loss of energy density of the negative electrode active material will be caused. If the average pore size is excessively small, the negative electrode active material holds too little electrolyte and the electrolyte is more likely to be extruded during charging and discharging, worsening the wettability and degrading the kinetic performance.

In some embodiments, a third example of the first aspect is proposed, where a thickness of the shell structure is denoted as d, a median particle size by volume Dᵥ50 of the negative electrode active material is denoted as D, and the negative electrode active material satisfies d ≥ 0.1D, meaning d ≥ 1 µm; optionally, the negative electrode active material satisfies 0.1D ≤ d ≤ 0.3D.

When the relationship between the thickness of the shell structure and the particle size of the negative electrode active material is improved, it helps further improve the kinetic performance of the negative electrode active material, shortens the transport path of lithium ions, and reduces the time required for lithium ions to reach the surface of graphite. If the shell structure is excessively thick, the negative electrode active material holds more electrolyte, the lithium ion transport path is reduced, but loss of the energy density is caused. If the shell structure is excessively thin, the lithium ion transport path is too long and the kinetic performance is degraded.

In some embodiments, a fourth example of the first aspect is proposed, where an interplanar spacing *d*002 of the shell structure is greater than an interplanar spacing *d*002 of the core structure. Optionally, the interplanar spacing *d*002 of the core structure is 0.3355 nm-0.3365 nm, optionally 0.3355 nm-0.3360 nm. Optionally, the interplanar spacing *d*002 of the shell structure is 0.3500 nm-0.3800 nm, optionally 0.3600 nm-0.3700 nm.

When the interplanar spacing *d*002 of the shell structure and the core structure is optimized, it helps improve the kinetic performance of the negative electrode material and increase the compacted density. If the interplanar spacing *d*002 is excessively large, it is more difficult to compact the negative electrode active material; and if the interplanar spacing *d*002 is excessively small, lithium ions are transported more slowly, degrading the kinetic performance.

In some embodiments, a fifth example of the first aspect is proposed, where pore size distribution P is defined as (Pₙ90-Pₙ10)/Pₙ50, where Pₙ10 represents a pore size corresponding to a cumulative distribution percentage by number of pores reaching 10%, Pₙ50 represents a pore size corresponding to a cumulative distribution percentage by number of pores reaching 50%, and Pₙ90 represents a pore size corresponding to a cumulative distribution percentage by number of pores reaching 90%. A pore size distribution of the shell structure is denoted as P1, satisfying P1 ≤ 0.7, optionally, P1 being 0.4-0.6; and/or a pore size distribution of the core structure is denoted as P2, satisfying P2 ≤ 0.6, optionally, P2 being 0.3-0.5.

When the pore size distribution of the shell structure and the core structure is improved, it helps further improve the kinetic performance of the negative electrode active material, shortens the transport path of lithium ions, and reduces the time required for lithium ions to reach the surface of graphite. A smaller pore size distribution coefficient indicates a more even porosity, a more balanced lithiation/delithiation state of the negative electrode active material, and better kinetic performance.

In some embodiments, a sixth example of the first aspect is proposed, where the negative electrode active material has a porosity of 60-80%, optionally 60%-70%.

An excessively high porosity indicates a lower compacted density of the negative electrode active material, and an excessively low porosity indicates worse kinetic performance of the negative electrode active material.

In some embodiments, a seventh example of the first aspect is proposed, where the negative electrode active material has a compacted density of 1.6-2.0 g/cm³ after being compacted under a pressure of 2000 kgf, optionally 1.7-1.9 g/cm³.

When the compacted density of the negative electrode active material is within the foregoing range, the fast charging performance can also be ensured.

In some embodiments, an eighth example of the first aspect is proposed, where the negative electrode active material has a specific surface area of 20-100m²/g, optionally 20-50m²/g.

When the specific surface area of the negative electrode active material is within the foregoing range, it helps increase the battery capacity, reduce impedance, and increase the battery charging and discharging rate. An excessively large specific surface area indicates more side reactions and shorter service life. If the specific surface area is excessively small, the lithium ion transport path is reduced and it is difficult to ensure the kinetic performance.

In some embodiments, a ninth example of the first aspect is proposed, where the negative electrode active material has a reversible gram capacity of ≥ 355 mAh/g, optionally, the reversible gram capacity being ≥ 360 mAh/g.

When the compacted density and pore structure of the negative electrode active material are optimized, it is ensured that the electrolyte can still migrate rapidly to the surface of graphite under the condition of a higher compacted density of the material. In this case, electrolyte is less polarized and the reversible gram capacity is increased accordingly, thereby improving the cycling performance of the battery.

In some embodiments, a tenth example of the first aspect is proposed, where the negative electrode active material has a median particle size by volume Dᵥ50 of 10-30 µm, optionally 15-25 µm.

When the median particle size of the negative electrode active material is optimized, it helps increase the compacted density and improve the wettability of the negative electrode active material in the electrolyte. If the median particle size of the negative electrode active material is smaller, a larger surface is exposed. In this case, lithium ions reach the surface of the material faster, which improves the kinetic performance but degrades the compacted density accordingly. If the median particle size is excessively large, bridging tends to occur in the process of slurry production. This hinders filtration, increases the lithium ion transport path, and degrades the kinetic performance.

In some embodiments, an eleventh example of the first aspect is proposed, where the negative electrode active material has a particle size distribution of 0.8 ≤ (Dᵥ90-Dᵥ10)/Dᵥ50 ≤ 1.8, optionally 1.2 ≤ (Dᵥ90-Dᵥ10)/Dᵥ50 ≤ 1.5.

When the particle size distribution of the negative electrode active material is optimized, it helps increase the compacted density and improve the wettability of the negative electrode active material in the electrolyte. An excessively narrow particle size distribution causes inappropriate gradation of coarse and fine particles, decreasing the tap density and compacted density. An excessively wide particle size distribution causes an increase in the sinuosity of the electrode plate layers and a lower porosity, thereby degrading the kinetic performance.

In some embodiments, a twelfth example of the first aspect is proposed, where the negative electrode active material contains a magnetic impurity. The magnetic impurity includes at least one of Fe, Ni, Cr, and Zn. Optionally, a proportion of the magnetic impurity is less than or equal to 1000 ppm.

When it is ensured that the proportions of the magnetic impurities of the negative electrode active material are within the foregoing range, it helps reduce self-discharge and safety risks.

In some embodiments, a thirteenth example of the first aspect is proposed, where the negative electrode active material satisfies any one of the following conditions (1) to (4):
(1) the shell structure is hard carbon and the core structure is soft carbon;
(2) the shell structure is soft carbon and the core structure is hard carbon;
(3) the shell structure is graphite and the core structure is hard carbon; and
(4) the shell structure is hard carbon and the core structure is graphite.

When raw materials for forming the shell structure and the core structure are optimized, it facilitates the formation of a gradient pore structure, thereby improving the wettability of the negative electrode active material in the electrolyte and improving the compacted density.

According to a second aspect of this application, a preparation method of negative electrode active material is provided and includes the following steps:
mixing and calcining a first carbon precursor, a catalyst 1, and a dispersant 1 to obtain a substance A;
mixing and calcining the substance A, a catalyst 2, a dispersant 2, and a second carbon precursor to obtain a substance B; and
performing heat treatment on the substance B to obtain a negative electrode active material;
where the negative electrode active material includes a core structure and a shell structure disposed around surface of the core structure, the core structure and the shell structure both have pores, and an average pore size of pores in the shell structure is greater than an average pore size of pores in the core structure.

In the technical solution according to this embodiment of this application, raw materials of the first carbon precursor and the second carbon precursor are calcined and heat-treated to obtain a negative electrode active material. The negative electrode active material can provide excellent kinetic performance under the condition of high compacted density. This method is simple to implement and highly reproducible, and is conducive to mass industrial production.

In some embodiments, a first example of the second aspect is proposed, where the first carbon precursor includes at least one of coal tar, coal pitch, petroleum residue, and petroleum asphalt.

In some embodiments, a second example of the second aspect is proposed, where the second carbon precursor includes at least one of water-soluble phenolic resin, glucose, and sucrose.

When types of the raw materials for forming the shell structure and the core structure are optimized, it helps further improve the electrolyte wettability and compacted density of the negative electrode active material.

In some embodiments, a third example of the second aspect is proposed, where the preparation method satisfies at least one of the following conditions (1) to (4): (1) the catalyst 1 includes at least one of ferrocene or iron acetylacetonate; (2) the catalyst 2 includes at least one of ferric chloride, ferrous chloride, ferric nitrate, ferrous nitrate, ferric sulfate, ferrous sulfate, or ferric citrate; (3) the dispersant 1 includes at least one of iso-octane, xylene, ethyl acetate, cyclohexanone, perchloroethylene, tetrahydrofuran, and benzyl alcohol; and (4) the dispersant 2 includes at least one of water, ethanol, ethylene glycol, propylene glycol, and glycolic acid.

Optimizing the types of the catalyst 1, catalyst 2, dispersant 1, and dispersant 2 helps promote the generation of the negative electrode active material with a gradient structure. Where, the catalyst 1 and the catalyst 2 can promote the complete development of unit cells of the negative electrode active material at low temperatures, ensuring that the battery has a high reversible gram capacity and good cycling performance. In addition, optimizing the types of the catalyst 1, catalyst 2, dispersant 1, and dispersant 2 helps reduce the requirements for reaction conditions. Compared with a conventional synthesis condition of 3000° C, the preparation method of this application reduces the energy consumption cost. In addition, the dispersants help evenly disperse the catalysts and the carbon precursors to form a homogeneous system.

In some embodiments, a fourth example of the second aspect is proposed, where the catalyst 1 has a particle size of 20 nm-200 nm, optionally 40 nm-100 nm; and/or the catalyst 2 has a particle size of 0.2 µm-2 µm, optionally 0.4 µm-1 µm.

Optimizing the particle sizes of the catalyst 1 and the catalyst 2 helps control the average pore sizes of the core structure and the shell structure. The average pore sizes of the core structure and the shell structure in the obtained negative electrode active material become larger as the particle sizes of the catalyst 1 and the catalyst 2 become larger, and vice versa.

In some embodiments, a fifth example of the second aspect is proposed, where a mass ratio of the first carbon precursor to the second precursor is 9:1-1:1, optionally 9: 1-7:3; and/or a mass ratio of the catalyst 1 to the first carbon precursor is (0.1-1):1, optionally (0.2-0.5):1; and/or a mass ratio of the catalyst 2 to the second carbon precursor is (0.3-1): 1, optionally (0.4-0.7):1.

Optimizing the mass ratio of the first carbon precursor to the second carbon precursor helps ensure that the active material has a high energy density and high kinetic performance. In the case of an excessively high mass ratio, the core structure of the negative electrode active material takes an extremely high proportion, worsening the porosity and electrolyte wettability and therefore degrading the kinetic performance. In the case of an excessively low mass ratio, the core structure of the negative electrode active material takes an extremely low proportion, decreasing the energy density.

Optimizing the amounts of the catalyst 1 and catalyst 2 helps control the average pore sizes of the core structure and the shell structure. The average pore sizes of the core structure and the shell structure in the obtained negative electrode active material become larger as the proportions of the added catalyst 1 and catalyst 2 become higher, and vice versa.

In some embodiments, a sixth embodiment of the second aspect is proposed, where a mass ratio of the dispersant 1 to the first carbon precursor is (0.5-5): 1, optionally (1-3):1; and/or a mass ratio of the dispersant 2 to the second carbon precursor is (1-5): 1, optionally (2-4): 1.

Optimizing the amounts of the dispersant 1 and dispersant 2 helps control the average pore sizes of the core structure and the shell structure. The average pore sizes of the core structure and the shell structure in the obtained negative electrode active material become more uniform as the proportions of the added dispersant 1 and dispersant 2 become higher.

In some embodiments, a seventh embodiment of the second aspect is proposed, where in the step of preparing the substance A, a temperature for the calcination is 600-800° C, optionally 700-800° C; and/or in the step of preparing the substance A, a duration of the calcination is 0.5-5 h, optionally 1 h-2 h.

Optimizing the calcination temperature in this step helps control the average pore size of the core structure. A higher calcination temperature means a smaller average pore size for the core structure in the obtained negative electrode active material.

The longer the first carbon precursor is calcined, to a greater extent the dispersant 1 volatilizes. In this case, the catalyst 1 is partially decomposed, and the average pore size of the core structure in the obtained negative electrode active material becomes smaller.

In some embodiments, an eighth example of the second aspect is proposed, where in the step of preparing the substance B, a temperature for the calcination is 800-1000° C, optionally 800-900° C; and/or in the step of preparing the substance B, a duration of the calcination is 2-5 h, optionally 2-3 h.

Optimizing the calcination temperature in this step helps control the average pore size of the shell structure. A higher calcination temperature means a smaller average pore size for the shell structure in the obtained negative electrode active material.

The longer the second carbon precursor is calcined, to a greater extent the dispersant 2 is volatilized. In this case, the catalyst 2 is partially decomposed, and the average pore size of the shell structure in the obtained negative electrode active material becomes smaller.

In some embodiments, a ninth example of the second aspect is proposed, where a temperature for the heat treatment is 1800-2800° C, optionally 2000-2500° C; and/or a duration of the heat treatment is 2-7 days, optionally 3-5 days.

Optimizing the heat treatment temperature helps control the average pore sizes of core structure and shell structure. When the heat treatment temperature is higher, the catalyst volatilizes more easily, and the average pore sizes of the core structure and the shell structure in the obtained negative electrode active material are smaller.

As heat treatment is performed for a longer time, the average pore sizes of the core structure and the shell structure decrease gradually. When the heat treatment duration is increased to a certain extent, the carbon structure is basically stable and the pore size structure does not change.

In some embodiments, a tenth example of the second aspect is proposed, where after the substance A is obtained, the substance A is pulverized; and/or after the substance B is obtained, the substance B is pulverized; and/or after the negative electrode active material is obtained, sieving is performed.

Pulverizing and/or sieving help reduce adhesion of particles caused by heat treatment so as to obtain particles of a target size.

According to a third aspect of this application, a secondary battery is provided, including a negative electrode plate. The negative electrode plate includes the negative electrode active material according to the first aspect of this application or a negative electrode active material obtained using the preparation method according to the second aspect of this application.

In the technical solution according to this embodiment of this application, the negative electrode active material of the first aspect of this application is used or the negative electrode active material obtained using the preparation method of the second aspect of this application is used. Therefore, the secondary battery of this application has a higher energy density and can support fast charging.

According to a fourth aspect of this application, an electric apparatus is provided, including the secondary battery according to the third aspect of this application.

In the technical solution according to this embodiment of this application, the negative electrode active material of the first aspect of this application is used or the negative electrode active material obtained using the preparation method of the second aspect of this application is used. Therefore, the electric apparatus of this application has a higher energy density and supports fast charging.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the purposes of the preferred implementations, and should not be construed as a limitation on the present invention. In addition, in all the accompanying drawings, same parts are denoted by same reference signs. In the accompanying drawings:
FIG. 1 is a schematic diagram of an embodiment of a secondary battery.
FIG. 2 is an exploded view of FIG. 1.
FIG. 3 is a schematic diagram of an embodiment of a battery module.
FIG. 4 is a schematic diagram of an embodiment of a battery pack.
FIG. 5 is an exploded view of FIG. 4.
FIG. 6 is a schematic diagram of an embodiment of an apparatus using a secondary battery as a power source.
FIG. 7 is a schematic structural diagram of a negative electrode active material prepared in Example 1 of this application.
FIG. 8 is a TEM view of a cross section of a negative electrode active material prepared in Example 1 of this application.

### DESCRIPTION OF EMBODIMENTS

Example embodiments of this disclosure will be described in more detail below with reference to the accompanying drawings. Although example embodiments of this disclosure are shown in the accompanying drawings, it should be understood that this disclosure may be implemented in various forms and should not be limited by the embodiments described herein. On the contrary, these embodiments are provided for a more thorough understanding of this disclosure, and can convey the full scope of this disclosure to those skilled in the art.

Unless otherwise defined, meanings of all technical and scientific terms used in the specification are the same as those commonly understood by persons skilled in the art of this application. The terms used herein are merely intended to describe specific embodiments, but not to limit this application. The terms "comprise", "include", and any variants thereof in the descriptions of the specification, claims, and accompanying drawings of this application are intended to cover a non-exclusive inclusion.

For simplicity, only some numerical ranges are explicitly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not explicitly recorded, each point or individual value between endpoints of a range is included in the range. Therefore, each point or individual value may be used as its own lower limit or upper limit to be combined with any other point or individual value or combined with any other lower limit or upper limit to form a range not explicitly recorded.

In the description of this specification, it should be noted that, unless otherwise stated, "more than" and "less than" are inclusive of the present number, and "more" in "one or more" means more than two (including two).

In the description of the embodiments of this application, the term "and/or" is only an associative relationship for describing associated objects, indicating that three relationships may be present. For example, A and/or B may indicate the following three cases: presence of A, presence of both A and B, and presence of B.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

The foregoing invention content of this application is not intended to describe each of the disclosed embodiments or implementations of this application. The following description illustrates exemplary embodiments in more detail by using examples. Throughout this application, guidance is provided by using a series of embodiments, and these embodiments may be used in various combinations. In the examples, enumeration is merely representative and should not be interpreted as exhaustive.

Secondary batteries are now widely used in battery electric vehicles, hybrid electric vehicles, smart grids, and other fields. With the continuous development of the new energy industry, customers have placed higher requirements for the use of secondary batteries. Current research of negative electrode active materials focuses more on how to improve their energy density. Compacted density is one of the reference measures of the energy density. Existing negative electrode active materials cannot provide excellent kinetic performance under the condition of high compacted density.

To solve the foregoing problem, the inventors, through in-depth research, have designed a negative electrode active material, in which a core structure with a small average pore size is wrapped in a shell structure with a large average pore size, so that the negative electrode active material has a gradient pore structure. Lithium ions are intercalated first into a portion, close to the electrolyte, of the negative electrode active material and then into a portion far away from the electrolyte. Such a gradient pore structure matches the concentration distribution of lithium ions in the negative electrode plate. This shortens the transport path of lithium ions and reduces the time required for the lithium ions to reach the surface of graphite, providing the negative electrode active material with excellent kinetic performance and improving the wettability of the negative electrode active material in the electrolyte. In addition, the negative electrode active material with a gradient pore structure also has a high compacted density. Therefore, the negative electrode active material can provide excellent kinetic performance under the condition of high compacted density. When used in a battery, this negative electrode active material can increase the energy density of the battery and achieve the objective of fast charging.

The technical solution in this embodiment of this application is applicable to the negative electrode active material, and also applicable to a preparation process of the negative electrode active material, a secondary battery using the negative electrode active material, and an electric apparatus using the secondary battery.

In a first aspect, according to some embodiments of this application, this application provides a negative electrode active material. The negative electrode active material includes a core structure and a shell structure disposed around surface of the core structure. The core structure and the shell structure both have pores, and an average pore size of pores in the shell structure is greater than an average pore size of pores in the core structure.

In some embodiments, the average pore size of pores in the shell structure is denoted as D1 and the average pore size of pores in the core structure is denoted as D2, and D1/D2 ≥ 4, optionally, 20 ≤ D1/D2 ≤ 50.

When D1/D2 satisfies the foregoing relation, it helps shorten the transport path of lithium ions and reduces the time required for the lithium ions to reach the surface of graphite. This provides the negative electrode active material with excellent kinetic performance, improves the wettability of the negative electrode active material in the electrolyte, and guarantees a high compacted density.

In some specific embodiments, D1/D2 may be, for example, 4, 10, 15, 20, 25, 30, 35, 40, 45, or, 50. D1/D2 may be within a range formed by using any two of the foregoing values as end values.

In some embodiments, the average pore size of pores in the shell structure is 100 nm-1000 nm, optionally 200 nm-500 nm; and/or the average pore size of pores in the core structure is 10 nm-100 nm, optionally 20 nm-50 nm.

Optimizing the average pore sizes of the shell structure and the core structure helps improve the kinetic performance of the negative electrode active material and increase the compacted density. If the average pore size is excessively large, loss of energy density of the negative electrode active material will be caused. If the average pore size is excessively small, the negative electrode active material holds too little electrolyte and the electrolyte is more likely to be extruded during charging and discharging, worsening the wettability and degrading the kinetic performance.

In some specific embodiments, the average pore size of pores in the shell structure may be, for example, 110 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, or 1 µm. The average pore size of pores in the shell structure may be within a range formed by using any two of the foregoing values as end values. For example, the average pore size of pores in the shell structure may be 110 nm-500 nm, 200-500 nm, or 500 nm-1 µm.

In some specific embodiments, the average pore size of pores in the core structure may be, for example, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, or 100 nm. Optionally, the average pore size of pores in the core structure may be 10-50 nm, 20-50 nm, or 50 nm-100 nm. The average pore size of pores in the core structure may be within a range formed by using any two of the foregoing values as end values.

In some embodiments, a thickness of the shell structure is denoted as d, a median particle size by volume Dv50 of the negative electrode active material is denoted as D, and the negative electrode active material satisfies d ≥ 0.1D, meaning d ≥ 1 µm; optionally, the negative electrode active material satisfies 0.1D ≤ d ≤ 0.3D.

When the relationship between the thickness of the shell structure and the particle size of the negative electrode active material is improved, it helps further improve the kinetic performance of the negative electrode active material, shortens the transport path of lithium ions, and reduces the time required for lithium ions to reach the surface of graphite. If the shell structure is excessively thick, the negative electrode active material holds more electrolyte, the lithium ion transport path is reduced, but loss of the energy density is caused. If the shell structure is excessively thin, the lithium ion transport path is too long and the kinetic performance is degraded.

In some specific embodiments, d may be, for example, equal to 0.1D, 0.2D, 0.3D, 0.4D, or 0.5D. Optionally, 0.1D ≤ d ≤ 0.3D. d may be within a range formed by using any two of the foregoing values as end values.

In some embodiments, a fourth example of the first aspect is proposed, where an interplanar spacing *d*002 of the shell structure is greater than an interplanar spacing *d*002 of the core structure. Optionally, the interplanar spacing *d*002 of the core structure is 0.3355 nm-0.3365 nm, optionally 0.3355 nm-0.3360 nm. Optionally, the interplanar spacing *d*002 of the shell structure is 0.3500 nm-0.3800 nm, optionally 0.3600 nm-0.3700 nm.

When the interplanar spacing *d*002 of the shell structure and the core structure is optimized, it helps improve the kinetic performance of the negative electrode material and increase the compacted density. If the interplanar spacing *d*002 is excessively large, it is more difficult to compact the negative electrode active material; and if the interplanar spacing *d*002 is excessively small, lithium ions are transported more slowly, degrading the kinetic performance.

In some specific embodiments, the interplanar spacing *d*002 of the shell structure may be, for example, 0.3355 nm, 0.3356 nm, 0.3357 nm, 0.3358 nm, 0.3359 nm, 0.3360 nm, 0.3361 nm, 0.3362 nm, 0.3363 nm, 0.3364 nm, or 0.3365 nm. Optionally, the interplanar spacing *d*002 of the shell structure may be 0.3355-0.3360 nm or 0.3360-0.3365 nm. The interplanar spacing *d*002 of the shell structure may be within a range formed by using any two of the foregoing values as end values.

In some specific embodiments, the interplanar spacing *d*002 of the core structure may be, for example, 0.3500 nm, 0.3550 nm, 0.3600 nm, 0.3650 nm, 0.3700 nm, 0.3750 nm, or 0.3800 nm. Optionally, the interplanar spacing *d*002 of the core structure may be 0.3600-0.3700 nm or 0.3700-0.3800 nm. The interplanar spacing *d*002 of the core structure may be within a range formed by using any two of the foregoing values as end values.

In some embodiments, pore size distribution P is defined as (Pₙ90-Pₙ10)/Pₙ50, where Pₙ10 represents a pore size corresponding to a cumulative distribution percentage by number of pores reaching 10%, Pₙ50 represents a pore size corresponding to a cumulative distribution percentage by number of pores reaching 50%, and Pₙ90 represents a pore size corresponding to a cumulative distribution percentage by number of pores reaching 90%. A pore size distribution of the shell structure is denoted as P1, satisfying P1 ≤ 0.7, optionally, P1 being 0.4-0.6; and/or a pore size distribution of the core structure is denoted as P2, satisfying P2 ≤ 0.6, optionally, P2 being 0.3-0.5.

When the pore size distribution of the shell structure and the core structure is improved, it helps further improve the kinetic performance of the negative electrode active material, shortens the transport path of lithium ions, and reduces the time required for lithium ions to reach the surface of graphite. A smaller pore size distribution coefficient indicates a more even porosity, a more balanced lithiation/delithiation state of the negative electrode active material, and better kinetic performance.

In some specific embodiments, P1 may be, for example, 0.1, 0.2, 0.3, 0.4, 0.5, 0.6, or 0.7. Optionally, P1 may be 0.4-0.6, 0.1-0.4, or 0.2-0.5. P1 may be within a range formed by using any two of the foregoing values as end values.

In some specific embodiments, P2 may be, for example, 0.1, 0.2, 0.3, 0.4, 0.5, or 0.6, and optionally, P2 may be 0.3-0.5, 0.1-0.3, or 0.2-0.4. P2 may be within a range formed by using any two of the foregoing values as end values.

In some embodiments, the porosity of the negative electrode active material is 60-80%, optionally 60%-70%.

Optimizing the porosity of the negative electrode active material helps improve the kinetic performance of the negative electrode active material and increase the compacted density. An excessively high porosity indicates a lower compacted density of the negative electrode active material, and an excessively low porosity indicates worse kinetic performance of the negative electrode active material.

In some specific embodiments, the porosity of the negative electrode active material may be, for example, 60%, 61%, 62%, 63%, 64%, 65%, 66%, 67%, 68%, 69%, 70%, 71%, 72%, 73%, 74%, 75%, 76%, 77%, 78%, 79%, or 80%. Optionally, the porosity of the negative electrode active material may be 60%-70% or 70%-80%. The porosity of the negative electrode active material may be within a range formed by using any two of the foregoing values as end values.

In some embodiments, the negative electrode active material has a compacted density of 1.6-2.0 g/cm³ after being compacted under a pressure of 2000 kgf, optionally 1.7-1.9 g/cm³.

When the compacted density of the negative electrode active material is within the foregoing range, the fast charging performance can also be ensured.

In some specific embodiments, the compacted density of the negative electrode active material after being compacted under a pressure of 2000 kgf may be, for example, 1.6 g/cm³, 1.7 g/cm³, 1.8 g/cm³, 1.9 g/cm³, or 2.0 g/cm³. The compacted density may be within a range formed by using any two of the foregoing values as end values.

In some embodiments, the negative electrode active material has a specific surface area of 20-100 m²/g, optionally 20-50 m²/g.

When the specific surface area of the negative electrode active material is within the foregoing range, it helps increase the battery capacity, reduce impedance, and increase the battery charging and discharging rate. An excessively large specific surface area indicates more side reactions and shorter service life. If the specific surface area is excessively small, the lithium ion transport path is reduced and it is difficult to ensure the kinetic performance.

In some specific embodiments, the specific surface area of the negative electrode active material may be, for example, 20 m²/g, 25 m²/g, 30 m²/g, 35 m²/g, 40 m²/g, 45 m²/g, 50 m²/g, 55 m²/g, 60 m²/g, 65 m²/g, 70 m²/g, 75 m²/g, 80 m²/g, 85 m²/g, 90 m²/g, 95 m²/g, or 100 m²/g. Optionally, the specific surface area of the negative electrode active material may be 20-50 m²/g, 30-70 m²/g, or 50 m²/g-100 m²/g. The specific surface area of the negative electrode active material may be within a range formed by using any two of the foregoing values as end values.

In some embodiments, the negative electrode active material has a reversible gram capacity of ≥ 355 mAh/g, optionally, the reversible gram capacity being ≥ 360 mAh/g.

When the compacted density and pore structure of the negative electrode active material are optimized, it is ensured that the electrolyte can still migrate rapidly to the surface of graphite under the condition of a higher compacted density of the material. In this case, electrolyte is less polarized and the reversible gram capacity is increased accordingly, thereby improving the cycling performance of the battery.

In some specific embodiments, the reversible gram capacity of the negative electrode active material may be, for example, 355 mAh/g, 356 mAh/g, 357 mAh/g, 358 mAh/g, 359 mAh/g, 360 mAh/g, 365 mAh/g, 370 mAh/g, or 375 mAh/g. The reversible gram capacity of the negative electrode active material may be within a range formed by using any two of the foregoing values as end values.

In some embodiments, the negative electrode active material has a median particle size by volume Dᵥ50 of 10-30 µm, optionally 15-25 µm.

When the median particle size of the negative electrode active material is optimized, it helps increase the compacted density and improve the wettability of the negative electrode active material in the electrolyte. If the median particle size of the negative electrode active material is smaller, a larger surface is exposed. In this case, lithium ions reach the surface of the material faster, which improves the kinetic performance but degrades the compacted density accordingly. If the median particle size is excessively large, bridging tends to occur in the process of slurry production. This hinders filtration, increases the lithium ion transport path, and degrades the kinetic performance.

In some specific embodiments, the median particle size by volume Dᵥ50 of the negative electrode active material may be, for example, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, or 30 µm. Optionally, the median particle size by volume Dᵥ50 of the negative electrode active material may be 15-25 µm, 10-20 µm, or 20-30 µm. The median particle size by volume Dᵥ50 of the negative electrode active material may be within a range formed by using any two of the foregoing values as end values.

In some embodiments, the negative electrode active material has a particle size distribution of 0.8 ≤ (Dᵥ90-Dᵥ10)/Dᵥ50 ≤ 1.8, optionally 1.2 ≤ (Dᵥ90-Dᵥ10)/Dᵥ50 ≤ 1.5.

When the particle size distribution of the negative electrode active material is optimized, it helps increase the compacted density and improve the wettability of the negative electrode active material in the electrolyte. An excessively narrow particle size distribution causes inappropriate gradation of coarse and fine particles, decreasing the tap density and compacted density. An excessively wide particle size distribution causes an increase in the sinuosity of the electrode plate layers and a lower porosity, thereby degrading the kinetic performance.

In some specific embodiments, the particle size distribution (Dᵥ90-Dᵥ10)/Dᵥ50 of the negative electrode active material may be equal to 0.8, 0.9, 1.0, 1.1, 1.2, 1.3, 1.4, 1.5, 1.6, 1.7, or 1.8. The particle size distribution (Dᵥ90-Dᵥ10)/Dᵥ50 of the negative electrode active material may be within a range formed by using any two of the foregoing values as end values.

In some embodiments, the negative electrode active material includes a magnetic impurity. The magnetic impurity comes primarily from raw materials, raw material calcination, a catalyst 1, and a catalyst 2. The magnetic impurity includes at least one of Fe, Ni, Cr, and Zn. A proportion of the magnetic impurity is less than or equal to 1000 ppm, for example, less than or equal to 500 ppm.

When the proportion of the magnetic impurity of the negative electrode active material is within the foregoing range, it helps reduce self-discharge and safety risks.

In some embodiments, the negative electrode active material satisfies that the shell structure is hard carbon and the core structure is soft carbon.

In some embodiments, the negative electrode active material satisfies that the shell structure is soft carbon and the core structure is hard carbon.

In some embodiments, the negative electrode active material satisfies that the shell structure is graphite and the core structure is hard carbon.

In some embodiments, the negative electrode active material satisfies that the shell structure is hard carbon and the core structure is graphite.

When raw materials for forming the shell structure and the core structure are optimized, it facilitates the formation of a gradient pore structure, thereby improving the wettability of the negative electrode active material in the electrolyte and improving the compacted density. Preferably, the negative electrode active material satisfies that the shell structure is soft carbon and the core structure is hard carbon.

According to a second aspect of this application, a preparation method of negative electrode active material is provided and includes the following steps:
mixing and calcining a first carbon precursor, a catalyst 1, and a dispersant 1 to obtain a substance A;
mixing and calcining the substance A, a catalyst 2, a dispersant 2, and a second carbon precursor to obtain a substance B; and
performing heat treatment on the substance B to obtain a negative electrode active material of the first aspect of this application.

In the technical solution according to this embodiment of this application, raw materials of the first carbon precursor, the second carbon precursor, and a specified catalyst are calcined and heat-treated to obtain a negative electrode active material. The negative electrode active material can provide excellent kinetic performance under the condition of high compacted density. This method is simple to implement and highly reproducible, and is conducive to mass industrial production.

In some embodiments, the first carbon precursor includes at least one of coal tar, coal pitch, petroleum residue, and petroleum asphalt.

In some embodiments, the second carbon precursor includes at least one of water-soluble phenolic resin, glucose, and sucrose.

When types of the raw materials for forming the shell structure and the core structure are optimized, it helps further improve the electrolyte wettability and compacted density of the negative electrode active material.

In some embodiments, the catalyst 1 includes at least one of ferrocene and iron acetylacetonate.

In some embodiments, the catalyst 2 includes at least one of ferric chloride, ferrous chloride, ferric nitrate, ferrous nitrate, ferric sulfate, ferrous sulfate, and ferric citrate.

In some embodiments, the dispersant 1 includes at least one of iso-octane, xylene, ethyl acetate, cyclohexanone, perchloroethylene, tetrahydrofuran, and benzyl alcohol.

In some embodiments, the dispersant 2 includes at least one of water, ethanol, ethylene glycol, propylene glycol, and glycolic acid.

Optimizing the types of the catalyst 1, catalyst 2, dispersant 1, and dispersant 2 helps promote the generation of the negative electrode active material with a gradient structure. Where, the catalyst 1 and the catalyst 2 can promote the complete development of unit cells of the negative electrode active material at low temperatures, ensuring that the battery has a high reversible gram capacity and good cycling performance. In addition, optimizing the types of the catalyst 1, catalyst 2, dispersant 1, and dispersant 2 helps reduce the requirements for reaction conditions. Compared with a conventional synthesis condition of 3000° C, the preparation method of this application reduces the energy consumption cost. In addition, the dispersants help evenly disperse the catalysts and the carbon precursors to form a homogeneous system.

In some embodiments, a particle size of the catalyst 1 is 20 nm-200 nm, optionally 40 nm-100 nm.

In some embodiments, a particle size of the catalyst 2 is 0.2 µm-2 µm, optionally 0.4 µm-1 µm.

Optimizing the particle sizes of the catalyst 1 and the catalyst 2 helps control the average pore sizes of the core structure and the shell structure. The average pore sizes of the core structure and the shell structure in the obtained negative electrode active material become larger as the particle sizes of the catalyst 1 and the catalyst 2 become larger, and vice versa.

In some specific embodiments, the particle size of the catalyst 1 may be, for example, 20 nm, 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, or 200 nm. Optionally, the particle size of the catalyst 1 may be 20-100 nm, 40-100 nm, or 100-200 nm. The particle size of the catalyst 1 may be within a range formed by using any two of the foregoing values as end values.

In some specific embodiments, the particle size of the catalyst 2 may be, for example, 0.2 µm, 0.3 µm, 0.4 µm, 0.5 µm, 0.6 µm, 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, or 2 µm. Optionally, the particle size of the catalyst 2 may be 0.2-1 µm, 0.4-1 µm, or 1 µm-2 µm. The particle size of the catalyst 2 may be within a range formed by using any two of the foregoing values as end values.

In some embodiments, a mass ratio of the first carbon precursor to the second carbon precursor is 9:1-1:1, optionally 9:1-7:3.

In some embodiments, a mass ratio of the catalyst 1 to the first carbon precursor is (0.1-1):1, optionally (0.2-0.5):1.

In some embodiments, a mass ratio of the catalyst 2 to the first carbon precursor is (0.3-1):1, optionally (0.4-0.7):1.

Optimizing the mass ratio of the first carbon precursor to the second carbon precursor helps ensure that the active material has a high energy density and high kinetic performance. In the case of an excessively high mass ratio, the core structure of the negative electrode active material takes an extremely high proportion, worsening the porosity and electrolyte wettability and therefore degrading the kinetic performance. In the case of an excessively low mass ratio, the core structure of the negative electrode active material takes an extremely low proportion, decreasing the energy density.

Optimizing the amounts of the catalyst 1 and catalyst 2 helps control the average pore sizes of the core structure and the shell structure. The average pore sizes of the core structure and the shell structure in the obtained negative electrode active material become larger as the proportions of the added catalyst 1 and catalyst 2 become higher, and vice versa.

In some specific embodiments, the mass ratio of the first carbon precursor to the second carbon precursor may be, for example, 9:1, 8:1, 7:1, 6:1, 5:1, 9:2, 4:1, 7:2, 3:1, 7:3, 2:1, 7:5, or 1:1. The mass ratio of the first carbon precursor to the second carbon precursor may be within a range formed by using any two of the foregoing values as end values.

In some specific embodiments, the mass ratio of the catalyst 1 to the first carbon precursor may be, for example, 0.1:1, 0.2:1, 0.3:1, 0.4:1, 0.5:1, 0.6:1, 0.7:1, 0.8:1, 0.9:1, or 1:1, optionally (0.1-1):1 or (0.2-0.5):1. The mass ratio of the catalyst 1 to the first carbon precursor may be within a range formed by using any two of the foregoing values as end values.

In some specific embodiments, the mass ratio of the catalyst 2 to the second carbon precursor may be, for example, 0.3:1, 0.4:1, 0.5:1, 0.6:1, 0.7:1, 0.8:1, 0.9:1, or 1:1, optionally (0.3-1.0):1, (0.4-0.7):1. The mass ratio of the catalyst 2 to the second carbon precursor may be within a range formed by using any two of the foregoing values as end values.

In some embodiments, a mass ratio of the dispersant 1 to the first carbon precursor is (0.5-5):1, optionally (1-3):1.

In some embodiments, a mass ratio of the dispersant 2 to the second carbon precursor is (1-5):1, optionally (2-4):1.

Optimizing the amounts of the dispersant 1 and dispersant 2 helps control the average pore sizes of the core structure and the shell structure. The average pore sizes of the core structure and the shell structure in the obtained negative electrode active material become more uniform as the proportions of the added dispersant 1 and dispersant 2 become higher.

In some specific embodiments, the mass ratio of the dispersant 1 to the first carbon precursor may be, for example, 0.5:1, 1:1, 1.5:1, 2:1, 2.5:1, 3:1, 3.5:1, 4:1, 4.5:1, or 5:1, optionally (0.5-2):1, (2-5):1 or optionally (1-3):1. The mass ratio of the dispersant 1 to the first carbon precursor may be within a range formed by using any two of the foregoing values as end values.

In some specific embodiments, the mass ratio of the dispersant 2 to the second carbon precursor may be, for example, 1:1, 1.5:1, 2:1, 2.5:1, 3:1, 3.5:1, 4:1, 4.5:1, or 5:1, optionally (1-2):1 or (2-4):1, or optionally (1-3):1. The mass ratio of the dispersant 2 to the second carbon precursor may be within a range formed by using any two of the foregoing values as end values.

In some embodiments, in the step of preparing a substance A, a temperature for the calcination is 600-800° C, optionally 700-800° C.

In some embodiments, in the step of preparing the substance A, a duration of the calcination is 0.5-5 h, optionally 1 h-2 h.

Optimizing the calcination temperature in this step helps control the average pore size of the core structure. A higher calcination temperature means a smaller average pore size for the core structure in the obtained negative electrode active material.

The longer the first carbon precursor is calcined, to a greater extent the dispersant 1 volatilizes. In this case, the catalyst 1 is partially decomposed, and the average pore size of the core structure in the obtained negative electrode active material becomes smaller.

In some specific embodiments, in the step of preparing the substance A, the temperature for the calcination may be, for example, 600° C, 650° C, 700° C, 750 ° C, or 800° C. The temperature for the calcination may be within a range formed by using any two of the foregoing values as end values.

In some specific embodiments, in the step of preparing the substance A, the duration of the calcination may be, for example, 0.5 h, 1 h, 1.5 h, 2 h, 2.5 h, 3 h, 3.5 h, 4 h, 4.5 h, or 5 h. The duration of the calcination may be within a range formed by using any two of the foregoing values as end values.

In some embodiments, in the step of preparing the substance B, a temperature for the calcination is 800-1000° C, optionally 800-900° C.

In some embodiments, in the step of preparing the substance B, a duration of the calcination is 2-5 h, optionally 2-3 h.

Optimizing the calcination temperature in this step helps control the average pore size of the shell structure. A higher calcination temperature means a smaller average pore size for the shell structure in the obtained negative electrode active material.

The longer the second carbon precursor is calcined, to a greater extent the dispersant 2 is volatilized. In this case, the catalyst 2 is partially decomposed, and the average pore size of the shell structure in the obtained negative electrode active material becomes smaller.

In some specific embodiments, in the step of preparing the substance B, the temperature for the calcination may be, for example, 800° C, 850° C, 900° C, 950 ° C, or 1000° C. The temperature for the calcination may be within a range formed by using any two of the foregoing values as end values.

In some specific embodiments, in the step of preparing substance B, the duration of the calcination may be, for example, 0.5 h, 1 h, 1.5 h, 2 h, 2.5 h, 3 h, 3.5 h, 4 h, 4.5 h, or 5 h. The duration of the calcination may be within a range formed by using any two of the foregoing values as end values.

In some embodiments, a temperature for the heat treatment is 1800-2800 ° C, optionally 2000-2500° C.

In some embodiments, a duration of the heat treatment is 2-7 days, optionally 3-5 days.

Optimizing the heat treatment temperature helps control the average pore sizes of core structure and shell structure. When the heat treatment temperature is higher, the catalyst volatilizes more easily, and the average pore sizes of the core structure and the shell structure in the obtained negative electrode active material are smaller.

As heat treatment is performed for a longer time, the average pore sizes of the core structure and the shell structure decrease gradually. When the heat treatment duration is increased to a certain extent, the carbon structure is basically stable and the pore size structure does not change.

In some specific embodiments, the temperature for the heat treatment may be, for example, 1800° C, 1900° C, 2000° C, 2100° C, 2200° C, 2300° C, 2400° C, 2500° C, 2600° C, 2700° C, or 2800° C. The temperature for the heat treatment may be within a range formed by using any two of the foregoing values as end values.

In some specific embodiments, the duration of the heat treatment may be, for example, 2 days, 2.5 days, 3 days, 3.5 days, 4 days, 4.5 days, 5 days, 5.5 days, 6 days, 6.5 days, or 7 days. The duration of heat treatment may be within a range formed by using any two of the foregoing values as end values.

In some embodiments, a tenth example of the second aspect is proposed, where after the substance A is obtained, the substance A is pulverized; and/or after the substance B is obtained, the substance B is pulverized; and/or after the negative electrode active material is obtained, sieving is performed.

Pulverizing and/or sieving help reduce adhesion of particles caused by heat treatment so as to obtain particles of a target size.

In some specific embodiments, after the substance A is obtained, the substance A is pulverized until the median particle size Dᵥ50 is 8 µm-27 µm, optionally 12 µm-22 µm. For example, the substance A is pulverized until the median particle size Dᵥ50 is 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, or 27 µm. The median particle size Dᵥ50 of the pulverized substance A may be within a range formed by using any two of the foregoing values as end values.

In some specific embodiments, after the substance B is obtained, the substance B is pulverized until the median particle size Dᵥ50 is 12 µm-32 µm, optionally 17 µm-27 µm. For example, the substance B is pulverized until the median particle size Dᵥ50 is 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, or 32 µm. The median particle size Dᵥ50 of the pulverized substance B may be within the range formed by using any two of the foregoing values as end values.

In some specific embodiments, after the negative electrode active material is obtained, sieving is performed until Dᵥ50 is 10 µm-30 µm, optionally 15 µm-25 µm. For example, sieving is performed until Dᵥ50 is 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, or 30 µm. Dv50 after sieving may be within a range formed by using any two of the foregoing values as end values.

In some embodiments, heat treatment may be performed in a graphitization furnace.

In some embodiments, after heat treatment, the obtained negative electrode active material is naturally cooled.

According to a third aspect of this application, a secondary battery is provided, including a negative electrode plate. The negative electrode plate includes the negative electrode active material according to the first aspect of this application or a negative electrode active material obtained using the preparation method according to the second aspect of this application.

In the technical solution according to this embodiment of this application, the negative electrode active material of the first aspect of this application is used or the negative electrode active material obtained using the preparation method of the second aspect of this application is used. Therefore, the secondary battery of this application has a higher energy density and can support fast charging.

### [Secondary battery]

A secondary is a battery that can be charged after being discharged to activate active materials for continuous use.

Generally, a secondary battery includes a positive electrode plate, a negative electrode plate, a separator, and an electrolyte. During charging and discharging of the battery, active ions are intercalated and deintercalated between the positive electrode plate and the negative electrode plate. The separator is disposed between the positive electrode plate and the negative electrode plate for separation purposes. The electrolyte conducts ions between the positive electrode plate and the negative electrode plate.

### [Negative electrode plate]

In the secondary battery, the negative electrode plate generally includes a negative electrode current collector and a negative electrode film layer provided on the negative electrode current collector. The negative electrode film layer includes the negative electrode active material provided in this application.

The negative electrode current collector may be common metal foil or a composite current collector (for example, the composite current collector may be formed by providing a metal material on a polymer matrix). As an example, the negative electrode current collector may be copper foil.

Generally, the negative electrode film layer may further optionally include a binder, a conductive agent, or another optional additive.

As an example, the conductive agent may be one or more of superconducting carbon, acetylene black, carbon black, Ketjen black, carbon dot, carbon nanotube, graphene, and carbon nanofiber.

As an example, the binder may be one or more of styrene-butadiene rubber (SBR), water-borne acrylic resin (water-based acrylic resin), polyvinylidene fluoride (PVDF), polytetrafluoroethylene (PTFE), ethylene vinyl acetate (EVA), polyvinyl alcohol (PVA), and polyvinyl butyral (PVB).

As an example, the another optional additive may be a thickening and dispersing agent (for example, sodium carboxymethyl cellulose CMC-Na) or a PTC thermistor material.

### [Positive electrode plate]

In the secondary battery, the positive electrode plate generally includes a positive electrode current collector and a positive electrode film layer provided on the positive electrode current collector. The positive electrode film layer includes a positive electrode active material.

The positive electrode current collector may be common metal foil or a composite current collector (the composite current collector may be formed by providing a metal material on a polymer matrix). As an example, the positive electrode current collector may be aluminum foil.

A specific type of the positive electrode active material is not limited and may be an active material known in the art that can be used as the positive electrode of a secondary battery, and those skilled in the art may select an active material based on actual needs.

As an example, the positive electrode active material may include, but is not limited to, one or more of lithium transition metal oxide, olivine-structured lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include, but are not limited to, one or more of lithium iron phosphate, lithium iron phosphate-carbon composite, lithium manganese phosphate, lithium manganese phosphate-carbon composite, lithium iron manganese phosphate, lithium iron manganese phosphate-carbon composite, and modified compounds thereof. These materials are all commercially available.

In some implementations, the modified compounds of the foregoing materials may be modified by doping or surface coating on the materials.

Generally, the positive electrode film layer may further optionally include a binder, a conductive agent, or another optional additive.

As an example, the conductive agent may be one or more of superconducting carbon, acetylene black, carbon black, Ketjen black, carbon dot, carbon nanotube, Super P (SP), graphene, and carbon nanofiber.

As an example, the binder may be one or more of styrene-butadiene rubber (SBR), water-borne acrylic resin (water-based acrylic resin), polyvinylidene fluoride (PVDF), polytetrafluoroethylene (PTFE), ethylene vinyl acetate (EVA), polyacrylic acid (PAA) carboxymethyl cellulose (CMC), polyvinyl alcohol (PVA), and polyvinyl butyral (PVB).

### [Separator]

In some implementations, the secondary battery further includes a separator. The separator is not limited to any particular type in this application, and may be any well-known porous separator with good chemical stability and mechanical stability.

In some implementations, a material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, the layers may be made of same or different materials, which is not particularly limited.

### [Electrolyte]

The secondary battery may include an electrolyte, and the electrolyte conducts ions between the positive electrode and the negative electrode. The electrolyte may include an electrolytic salt and a solvent.

As an example, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

As an example, the solvent may be one or more selected from a group consisting of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE).

In some implementations, the electrolyte further includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

In some implementations, the secondary battery of this application is a lithium-ion secondary battery.

The secondary battery may be prepared using a conventional method in the art. For example, the positive electrode plate, the separator, and the negative electrode plate are wound (or stacked) in sequence to obtain a battery cell, where the separator is located between the positive electrode plate and the negative electrode plate for isolation. The battery cell is placed in an outer package, and an electrolyte is injected before sealing. A secondary battery is obtained.

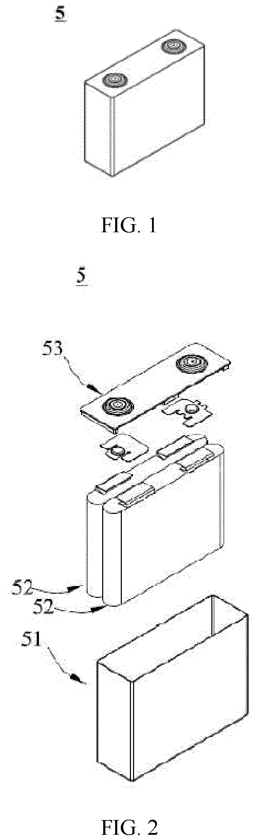

Embodiments of this application have no special limitations on a shape of the secondary battery, and the secondary battery may be of a cylindrical shape, a prismatic shape, or any other shapes. FIG. 1 shows a prismatic secondary battery 5 as an example.

In some embodiments, the secondary battery may include an outer package. The outer package is used to package a positive electrode plate, a negative electrode plate, and an electrolyte.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity.

The positive electrode plate, the negative electrode plate, and the separator may be made into an electrode assembly 52 through winding or stacking. The electrode assembly 52 is packaged in the accommodating cavity. The electrolyte infiltrates the electrode assembly 52. The secondary battery 5 may contain one or more electrode assemblies 52, which can be adjusted based on needs.

In some embodiments, the outer package of the secondary battery may be a hard shell, for example, a hard plastic shell, an aluminum shell, or a steel shell. The outer package of the secondary battery may alternatively be a soft bag, for example, a soft pouch. A material of the soft bag may be plastic, for example, may include one or more of polypropylene (PP), polybutylene terephthalate (PBT), polybutylene succinate (PBS), and the like.

In some embodiments, the secondary batteries may be assembled into a battery module. The battery module may include a plurality of secondary batteries, and a specific quantity may be adjusted according to application and capacity of the battery module.

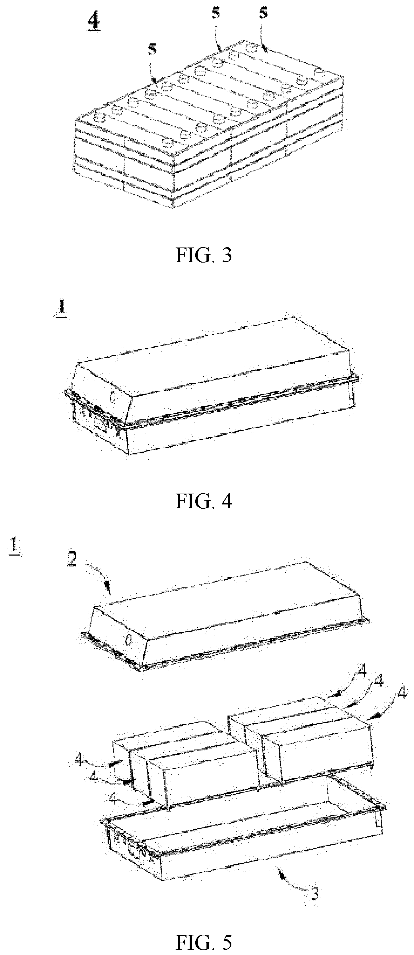

FIG. 3 shows a battery module 4 as an example. In the battery module 4, a plurality of secondary batteries 5 may be sequentially arranged in a length direction of the battery module 4. Certainly, the batteries may alternatively be arranged in any other manners. Further, the plurality of secondary batteries 5 may be fastened with fasteners.

Optionally, the battery module 4 may further include a housing that provides an accommodating space, and the plurality of secondary batteries 5 are accommodated in the accommodating space.

In some embodiments, the battery modules may be further assembled into a battery pack, and a quantity of battery modules included in the battery pack may be adjusted based on application and capacity of the battery pack.

FIG. 4 and FIG. 5 show a battery pack 1 as an example. The battery pack 1 may include a battery box and a plurality of battery modules 4 provided in the battery box. The battery box includes an upper box body 2 and a lower box body 3. The upper box body 2 can cover the lower box body 3 to form a closed space for accommodating the battery modules 4. The plurality of battery modules 4 may be arranged in the battery box in any manner.

### [Electric apparatus]

This application further provides an electric apparatus, including at least one of the secondary battery, the battery module, and the battery pack. The secondary battery, the battery module, or the battery pack may be used as a power source of the electric apparatus, or an energy storage unit of the electric apparatus. The electric apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A secondary battery, a battery module, or a battery pack may be selected for the electric apparatus based on application needs.

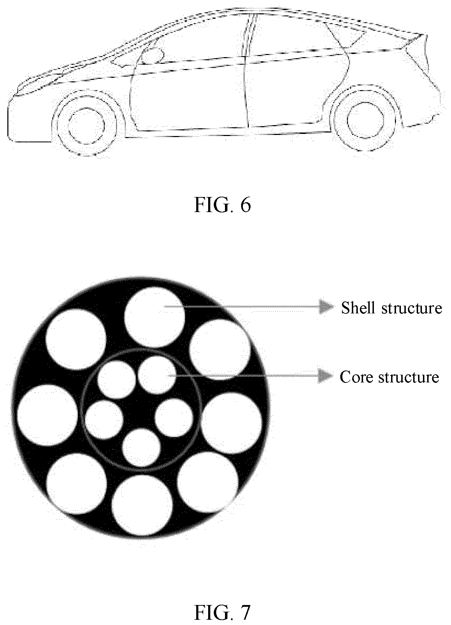

FIG. 6 shows an apparatus as an example. The apparatus is a battery electric vehicle, a hybrid electric vehicle, or a plug-in hybrid electric vehicle, or the like. To meet requirements of the apparatus for a battery with high power and high energy density, a battery pack or a battery module may be used.

In another example, the apparatus may be a mobile phone, a tablet computer, a notebook computer, or the like. The apparatus is usually required to be light and thin, and a secondary battery may be used as a power source.

The negative electrode active material of the first aspect of this application is used or the negative electrode active material obtained using the preparation method of the second aspect of this application is used. Therefore, the electric apparatus of this application has a higher energy density and can support fast charging.

The following further describes beneficial effects of this application with reference to examples.

### Examples

To describe the technical problems solved by this application, technical solutions, and beneficial effects of this application more clearly, the following provides more detailed description with reference to the examples and accompanying drawings. Apparently, the described examples are merely some but not all of the examples of this application. The following description of at least one example embodiment is merely illustrative and shall never be construed as any limitation on this application or use of this application. All other examples obtained by a person of ordinary skill in the art based on the examples of this application without creative efforts shall fall within the protection scope of this application.

The materials used in the examples of this application are all commercially available.

### Preparation of negative electrode active material

### Example 1

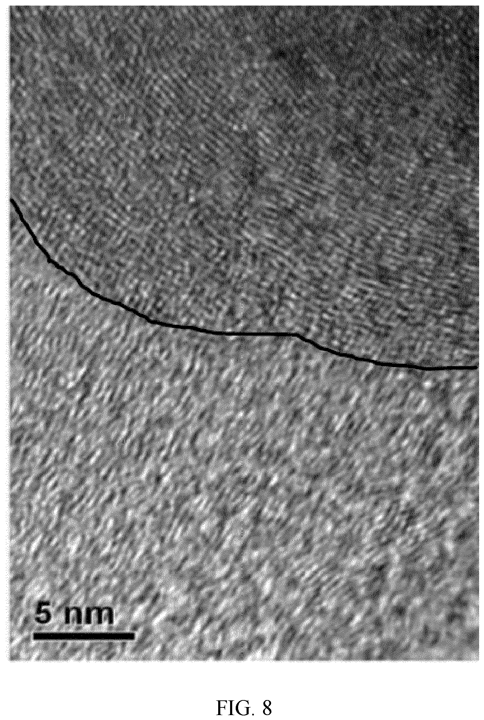

Coal tar, a catalyst 1 of iron acetylacetonate (with a particle size of 40 nm), and ethyl acetate were mixed evenly at a mass ratio of 1:0.2: 1, calcined at 700° C for one hour, and pulverized until the median particle size Dᵥ50 was 20 µm, to obtain a substance A. The prepared substance A was then immersed in a phenolic resin (with a mass ratio of phenolic resin:coal tar being 7:2) aqueous solution mixed with 300 nm of ferric chloride, where a mass ratio of phenolic resin:ferric chloride:water was 1:0.3:2. The mixture was calcined at 800° C for two hours, and pulverized until the median particle size Dᵥ50 was 27 µm, to obtain a substance B. The substance B was heat-treated at 2000° C for five days in a graphitization furnace, and after natural cooling, sieving was performed until the median particle size Dᵥ50 was 25 µm, to obtain a negative electrode active material with a gradient pore structure. FIG. 7 is a schematic diagram of a structure of the negative electrode active material. FIG. 8 is a TEM view of a cross section of the negative electrode active material.

### Examples 2-21

Examples 2-21 were performed according to the method described in Example 1, with a difference from Example 1 in the parameters listed in Table 1 below.

### Comparative Examples 1-4

Comparative Examples 1-4 were performed according to the method described in Example 8, with a difference from Example 8 in the parameters listed in Table 1 below.

### Comparative Example 5

Coal tar was calcined at 700° C for one hour, pulverized until the median particle size Dᵥ50 was 20 µm, and heat-treated at 3000° C for seven days in a graphitization furnace. After natural cooling, sieving was performed to remove adhesive coarse particles until the median particle size Dᵥ50 was 20 µm, to obtain a substance A. The substance A was mixed with petroleum asphalt at a ratio of 20:1, and the mixture was then calcined at 1100° C for two hours to obtain a substance B, which was the negative electrode active material.

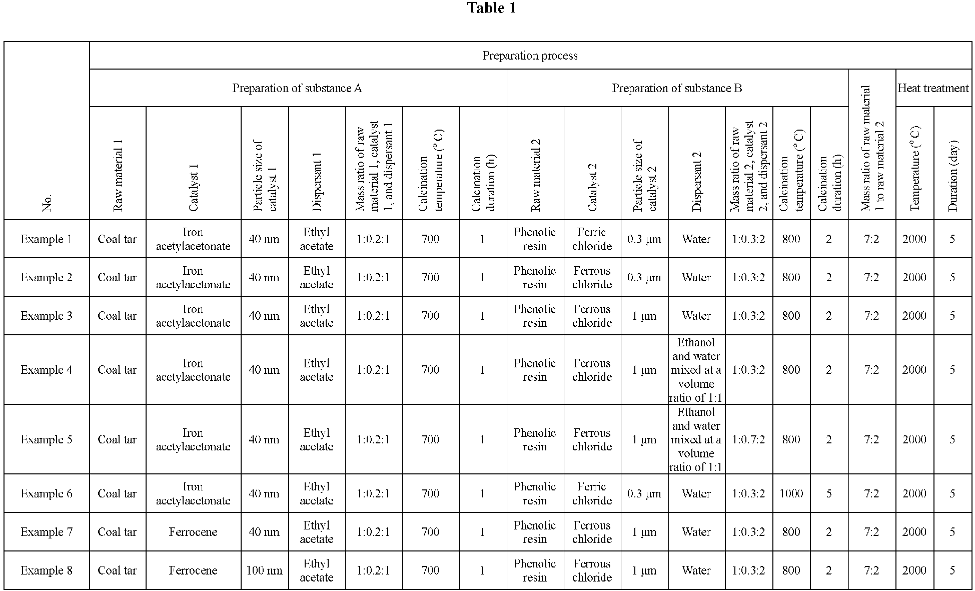

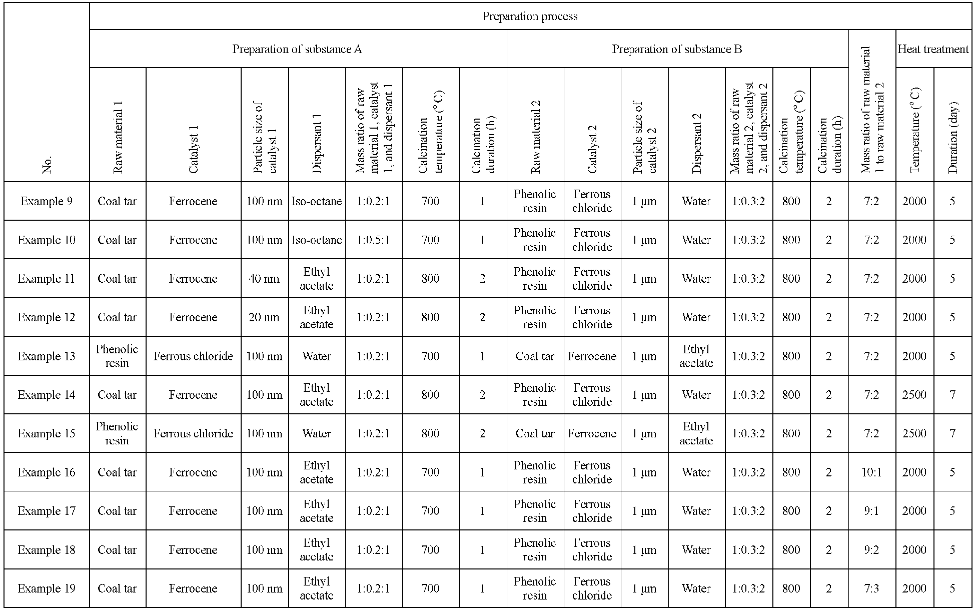

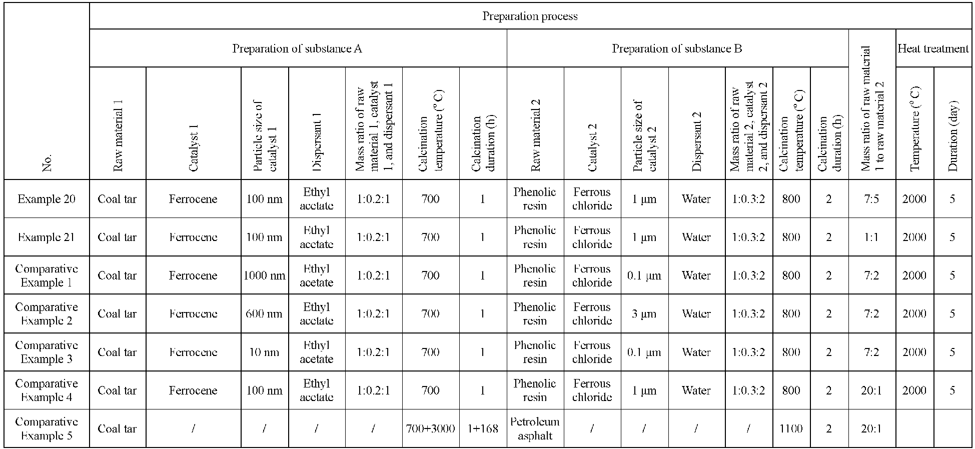

The negative electrode active materials prepared in the foregoing examples and comparative examples are used to prepare a half battery and a secondary battery according to the following common preparation method.

### Preparation of half battery

The prepared negative electrode active material, a conductive agent Super P, and a binder (PVDF), at a mass ratio of 91.6: 1.8:6.6, were evenly stirred with a solvent NMP (N-methyl pyrrolidone). The mixture was applied on 6 µm copper foil and made into a negative electrode plate after 12 hours of vacuum drying at 120° C. The negative electrode plate was then rolled by a roller till a compacted density of 1.5 g/cm³. The negative electrode plate was punched into a small disc, namely an operating electrode, a lithium sheet was used as a counter electrode, a 12 µm polypropylene film was used as a separator, and LiPF₆ solute dissolved in a solvent of ethylene carbonate (EC), ethyl methyl carbonate (EMC), and diethyl carbonate (DEC) (1:1:1) was used as an electrolyte. They were assembled in a CR2032 button cell to obtain a half battery.

### Preparation of secondary battery

A positive electrode active material LiNi_{0.8}Mn_{0.1}Co_{0.1}O₂ was mixed with conductive carbon black and PVDF at a weight ratio of 96:2.5:1.5, and an appropriate amount of N-methyl pyrrolidone was added. The mixture was stirred uniformly to obtain a positive electrode slurry. The positive electrode slurry was applied on aluminum foil and then dried to obtain a positive electrode plate. A loading amount of positive electrode active material on the positive electrode plate was 0.02 g/cm².

The prepared negative electrode active material was mixed with conductive carbon black, sodium carboxymethyl cellulose, and styrene-butadiene rubber at a weight ratio of 96.5:0.8:1.2:1.5, and an appropriate amount of deionized water was added. The mixture was stirred uniformly to obtain a negative electrode slurry. The negative electrode slurry was applied on 6 µm copper foil and then dried to obtain a negative electrode plate. The loading amount of negative electrode active material on the negative electrode plate was 0.012 g/cm².

Ethylene carbonate (EC), ethyl methyl carbonate (EMC), and diethyl carbonate (DEC) were mixed at a volume ratio of 1:1:1, and LiPF6 was dissolved uniformly in the solution to obtain an electrolyte. In the electrolyte, the concentration of LiPF₆was 1 mol/L.

With a polypropylene film as a separator, the positive electrode plate, the separator, and the negative electrode plate prepared were stacked in sequence, where the separator is placed between the positive and negative electrode plates for isolation, wound up, and then packed in an aluminum-plastic bag. The electrolyte was injected. Formation and capacity testing were performed after packaging to obtain a secondary battery.

### Characterization test of negative electrode active material

### 1. Reversible gram capacity test on the negative electrode active material

After being left standing for six hours at 25° C, the half battery was discharged at a constant current of 0.05C (1C is a current at which the battery is fully charged in one hour) to 5.0 mV, at a constant current of 50 µA to 5.0 mV, and at a constant current of 10 µA to 5.0 mV. After 10 minutes of standing, the battery was charged to 2.0 V at a constant current of 0.1C. The charge capacity at the constant current was recorded as the reversible gram capacity of the negative electrode active material. The test results are shown in Table 2 below.

### 2. Test on an average pore size of pores in the shell structure of the negative electrode active material

With reference to a transmission electron microscope analyzer test method prescribed in JY/T0581-2020, a transmission electron microscope (JOEL JEM-2100 Plus) was used to select n1 ≥ 20 particles, n2 ≥ 20 selections (with a size of 1 µm*9 µm) were made on the core structure of each particle, sizes of the pores in the selections were measured, and the average pore size was calculated through statistical analysis. The test results are shown in Table 2 below.

### 3. Test on an average pore size of pores in the core structure of the negative electrode active material

With reference to JY/T0581-2020 transmission electron microscope analyzer test method, a transmission electron microscope (JOEL JEM-2100 Plus) was used to select n1 ≥ 20 particles, n2 ≥ 20 selections (with a size of 1 µm*9 µm) were made on the core structure of each particle, sizes of the pores in the selections were measured, and the average pore size was calculated through statistical analysis. The test results are shown in Table 2 below.

### 4. Thickness test on the shell structure of the negative electrode active material

With reference to JY/T0581-2020 transmission electron microscope analyzer test method, a transmission electron microscope (for example, JOEL JEM-2100 Plus) was used to select n1 ≥ 20 particles, n2 ≥ 20 selections (with a size of 1 µm*9 µm) were made on the shell structure of each particle, and thicknesses of the selections were measured. The test results are shown in Table 2 below.

### 5. Test on a median particle size by volume Dᵥ50 of the negative electrode active material

With reference to GB/T 19077-2016 particle size analysis laser diffraction method, the median particle size by volume Dᵥ50 of the negative electrode active material was measured using a Mastersizer 3000 laser particle size analyzer. Dᵥ50 indicates a particle size corresponding to a cumulative volume distribution percentage of a material reaching 50%. The test results are shown in Table 2 below.

### 6. Test on pore size distribution P1 of the shell structure of the negative electrode active material

With reference to JY/T0581-2020 transmission electron microscope analyzer test method, a transmission electron microscope (JOEL JEM-2100 Plus) was used to select n1 ≥ 20 particles, n2 ≥ 20 sections (with a size of 1 µm*9 µm) were made on the shell structure of each particle, sizes of the pores in the selections were measured, and the pore size distribution P1 was obtained through statistical analysis. The pore size distribution P1 is denoted as (Pₙ90-Pₙ10)/Pₙ50, where Pₙ10 indicates a pore size corresponding to a cumulative distribution percentage of pore quantity reaching 10%, Pₙ50 indicates a pore size corresponding to a cumulative distribution percentage of pore quantity reaching 50%, and Pₙ90 indicates a pore size corresponding to a cumulative distribution percentage of pore quantity reaching 90%. The test results are shown in Table 2 below.

### 7. Test on pore size distribution P2 of the core structure of the negative electrode active material

With reference to JY/T0581-2020 transmission electron microscope analyzer test method, a transmission electron microscope (JOEL JEM-2100 Plus) was used to select n1 ≥ 20 particles, n2 ≥ 20 selections (with a size of 1 µm*9 µm) were made on the shell structure of each particle, sizes of the pores in the selections were measured, and the pore size distribution P2 was obtained through statistical analysis. The pore size distribution P2 is denoted as (Pₙ90-Pₙ10)/nP50, where Pₙ10 indicates a pore size corresponding to a cumulative distribution percentage of pore quantity reaching 10%, Pₙ50 indicates a pore size corresponding to a cumulative distribution percentage of pore quantity reaching 50%, and Pₙ90 indicates a pore size corresponding to a cumulative distribution percentage of pore quantity reaching 90%. The test results are shown in Table 2 below.

### 8. Porosity test on the negative electrode active material

The porosity of the negative electrode active material was tested with reference to GB/T 24586-2009 true density method. The test results are shown in Table 2 below.

### 9. Test on an interplanar spacing d002 of the shell structure of the negative electrode active material

With reference to JY/T0581-2020 transmission electron microscope analyzer test method, a transmission electron microscope (JOEL JEM-2100 Plus) was used to select n1 ≥ 20 particles, n2 ≥ 20 selections (with a size of 1 µm*9 µm) were made on the shell structure of each particle, lattice fringes in the selections were measured, and the interplanar spacing d002 was obtained through statistical analysis. The test results are shown in Table 2 below.

### 10. Test on an interplanar spacing d002 of the core structure of the negative electrode active material

With reference to JY/T0581-2020 transmission electron microscope analyzer test method, a transmission electron microscope (JOEL JEM-2100 Plus) was used to select n1 ≥ 20 particles, n2 ≥ 20 selections (with a size of 1 µm*9 µm) were made on the core structure of each particle, lattice fringes in the selections were measured, and the interplanar spacing d002 was obtained through statistical analysis. The test results are shown in Table 2 below.

### 11. Compacted density test of the negative electrode active material after being compacted under a pressure of 2000 kgf

The compacted density of powder was tested with reference to GB/T 24533-2009 compacted density test method. The test results are shown in Table 2 below.

### 12. Specific surface area test of the negative electrode active material

The specific surface area of powder was measured with reference to GB/T 19587-2004 gas adsorption BET method. The test results are shown in Table 2 below.

### 13. Particle size distribution test of the negative electrode active material

With reference to GB/T 19077-2016 particle size analysis laser diffraction method, particle sizes by volume Dᵥ10, Dᵥ50 and Dᵥ90 of the negative electrode active material were measured using a Mastersizer 3000 laser particle size analyzer. Dᵥ10 indicates a particle size corresponding to a cumulative volume distribution percentage of the particles reaching 10%, Dᵥ50 indicates a particle size corresponding to a cumulative volume distribution percentage of the particles reaching 50%, and Dᵥ90 indicates a particle size corresponding to a cumulative volume distribution percentage of the particles reaching 90%. The test results are shown in Table 2 below.

### 14. Test on types and proportions of magnetic impurities in the negative electrode active material

Proportions of elements Fe, Ni, Cr, and Zn were tested with reference to EPA 6010D-2014 elemental analysis-inductively coupled plasma emission spectrometry. The test results are shown in Table 2 below.

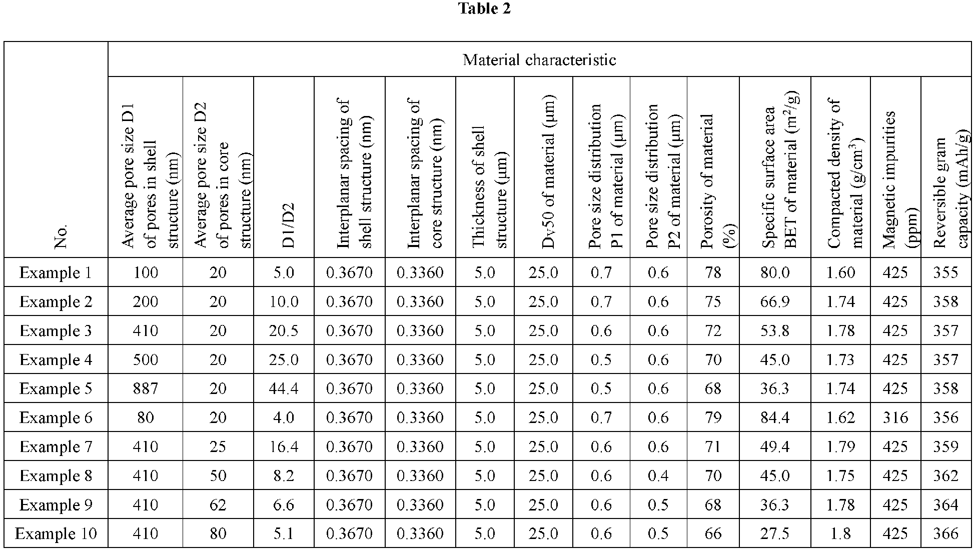

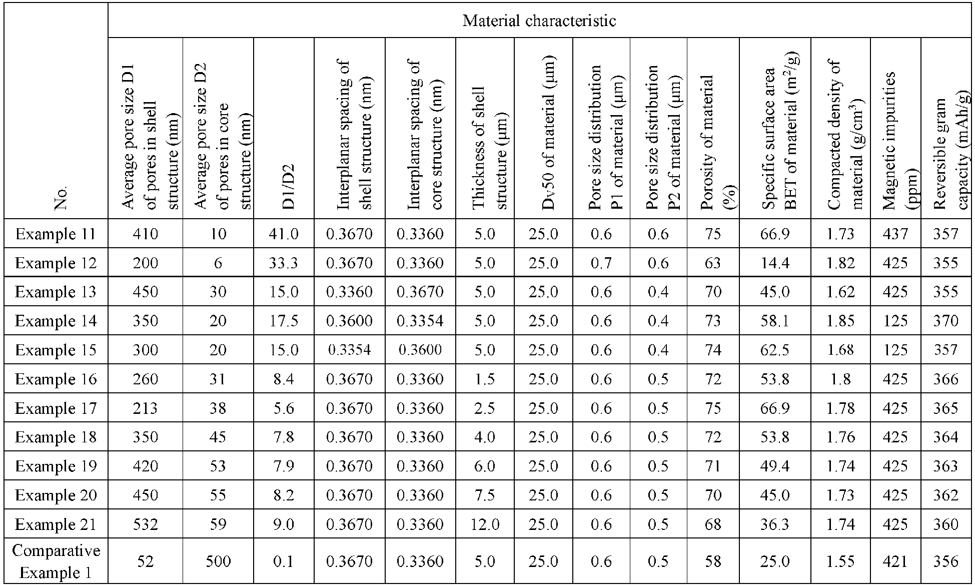

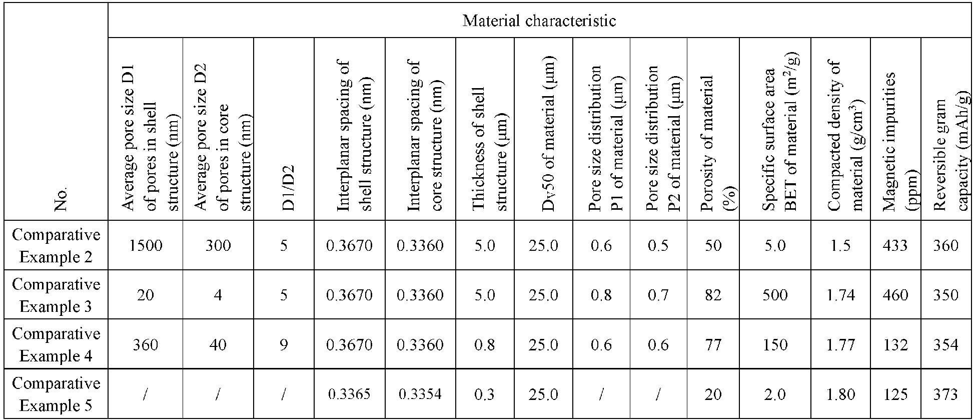

### Characterization of electrical properties of a secondary battery

### 1. Fast charging performance test:

At 25° C room temperature, the secondary battery prepared in the examples and comparative examples was charged at a constant current of 0.33C to 4.25 V, charged at a constant voltage to a current of 0.05C, left standing for five minutes, and then discharged to 2.5 V at a constant current of 0.33C. The constant-current discharge capacity was recorded as the initial capacity C0. Then, the battery was charged at constant currents of 0.5CO, 1CO, 1.5CO, 2C0, 2.5C0, 3C0, and 3.5C0 in sequence to a full battery potential of 4.25 V or a negative electrode cut-off potential of 0 mV (discharge completed when either of the conditions was met), and then discharged to 2.5 V at 0.33C0 after the completion of each charge. At an interval of 10% SOC (State of Charge, state of charge), negative electrode potentials corresponding to different charging rates were recorded and rate-negative electrode potential curves in different SOCs were plotted, and then charging rates corresponding to the negative electrode potential of 0 mV in different sacs were obtained through linear fitting and recorded as Cx (x=2-8). According to a formula (1/C2 + 1/C3 + 1/C4 +1/C5 + 1/C6 + 1/C7 + 1/C8) × 0.1 × 60, charging time T (min) required for charging the secondary battery from 10% SOC to 80% SOC was calculated. Shorter charging time indicates better performance of the battery in fast charging. The test results are shown in Table 3 below.

### 2. Ultimate compacted density test of the negative electrode plate:

The negative electrode plate prepared in the examples and comparative examples was placed on a roller for a rolling test. The roller gap and roller pressure were adjusted until the electrode plate cannot be pressed further or breaks were observed on edges, a thickness of the electrode plate was measured using a micrometer in a direction perpendicular to the rolling direction, and 12 thickness values were recorded and averaged to obtain h1 (µm). The rolled electrode plate was punched by a punching machine into small discs of 1540.25 mm². The discs were weighed using a millionth scale, and the weights of the 12 small discs were recorded and averaged to obtain M1 (g). Copper foil not loaded with a negative electrode active material was fetched, thickness of the copper foil was measured using a micrometer, and 12 thickness values were measured and averaged to obtain h0 (µm). The copper foil was punched by a punching machine into small discs of 1540.25 mm². The discs were weighed using a millionth scale, and the weights of the 12 small discs were recorded and averaged to obtain M0 (g). The ultimate compacted density of the negative electrode plate was calculated according to the formula (M1-M0)/1540.25*(h1-h0)*10⁶. A greater value indicates a higher energy density for the battery. The test results are shown in Table 3 below.

**Table 3**

| No. | Charging time T (min) | Ultimate compacted density of electrode plate (g/cm³) |
|---|---|---|
| Example 1 | 15.0 | 1.62 |
| Example 2 | 14.5 | 1.76 |
| Example 3 | 13.6 | 1.80 |
| Example 4 | 14.0 | 1.75 |
| Example 5 | 13.0 | 1.76 |
| Example 6 | 15.5 | 1.64 |
| Example 7 | 10.5 | 1.81 |
| Example 8 | 9.0 | 1.77 |
| Example 9 | 10.7 | 1.80 |
| Example 10 | 11.6 | 1.82 |
| Example 11 | 13.4 | 1.75 |
| Example 12 | 14.0 | 1.84 |
| Example 13 | 10.8 | 1.64 |
| Example 14 | 12.3 | 1.87 |
| Example 15 | 11.2 | 1.70 |
| Example 16 | 12.8 | 1.82 |
| Example 17 | 11.2 | 1.80 |
| Example 18 | 9.5 | 1.78 |
| Example 19 | 9.6 | 1.76 |
| Example 20 | 10.0 | 1.75 |
| Example 21 | 10.5 | 1.76 |
| Comparative Example 1 | 17.6 | 1.57 |
| Comparative Example 2 | 19.8 | 1.53 |
| Comparative Example 3 | 23.1 | 1.75 |
| Comparative Example 4 | 24.6 | 1.79 |
| Comparative Example 5 | 27.0 | 1.82 |

As can be seen from Table 2 and Table 3, the ultimate compacted density of a negative electrode plate containing the negative electrode active material of this application is comparable to the ultimate compacted densities of the negative electrode plates obtained in Comparative Examples 1 to 5. However, the charging time of the secondary battery of this application is obviously shorter than the charging time of the secondary batteries obtained in Comparative Examples 1 to 5 at such a high compacted density. It can be seen that the negative electrode active material of this application can provide excellent kinetic performance under the condition of high compacted density, and can achieve the objective of battery fast charging.

The foregoing merely describes preferred specific implementations of the present invention, and is not intended to limit the protection scope of the present invention. Any variations or replacements apparent to those skilled in the art within the technical scope disclosed by the present invention shall fall within the protection scope of the present invention. Therefore, the protection scope of the present invention shall be subject to the protection scope of the claims.

## Claims

1. A negative electrode active material, **characterized in that** the negative electrode active material comprises a core structure and a shell structure disposed around surface of the core structure, the core structure and the shell structure both have pores, and an average pore size of pores in the shell structure is greater than an average pore size of pores in the core structure.

2. The negative electrode active material according to claim 1, **characterized in that** the average pore size of pores in the shell structure is denoted as D1 and the average pore size of pores in the core structure is denoted as D2, and D1/D2 ≥ 4, optionally, 20 ≤ D1/D2 ≤ 50.

3. The negative electrode active material according to claim 1 or 2, **characterized in that**:
the average pore size of pores in the shell structure is 100 nm-1000 nm, optionally 200 nm-500 nm; and/or
the average pore size of pores in the core structure is 10 nm-100 nm, optionally 20 nm-50 nm.

4. The negative electrode active material according to any one of claims 1 to 3, **characterized in that** a thickness of the shell structure is denoted as d, a median particle size by volume Dᵥ50 of the negative electrode active material is denoted as D, and the negative electrode active material satisfies d ≥ 0.1D, namely d ≥ 1 µm; optionally, the negative electrode active material satisfies 0.1D ≤ d ≤ 0.3D.

5. The negative electrode active material according to any one of claims 1 to 4, **characterized in that** an interplanar spacing *d*002 of the shell structure is greater than an interplanar spacing *d*002 of the core structure;
optionally, the interplanar spacing *d*002 of the core structure is 0.3355 nm-0.3365 nm, optionally 0.3355 nm-0.3360 nm; and
optionally, the interplanar spacing *d*002 of the shell structure is 0.3500 nm-0.3800 nm, optionally 0.3600 nm-0.3700 nm.

6. The negative electrode active material according to any one of claims 1 to 5, **characterized in that** pore size distribution P is defined as (Pₙ90-Pₙ10)/Pₙ50, wherein Pₙ10 represents a pore size corresponding to a cumulative distribution percentage by number of pores reaching 10%, Pₙ50 represents a pore size corresponding to a cumulative distribution percentage by number of pores reaching 50%, and Pₙ90 represents a pore size corresponding to a cumulative distribution percentage by number of pores reaching 90%,
wherein
a pore size distribution of the shell structure is denoted as P1, satisfying P1 ≤ 0.7, optionally, P1 being 0.4-0.6; and/or
a pore size distribution of the core structure is denoted as P2, satisfying P2 ≤ 0.6, optionally, P2 being 0.3-0.5.

7. The negative electrode active material according to any one of claims 1 to 6, **characterized in that** the porosity is 60-80%, optionally 60%-70%.

8. The negative electrode active material according to any one of claims 1 to 7, **characterized in that** the negative electrode active material has a compacted density of 1.6-2.0 g/cm³ after being compacted under a pressure of 2000 kgf, optionally 1.7-1.9 g/cm³.

9. The negative electrode active material according to any one of claims 1 to 8, **characterized in that** the negative electrode active material has a specific surface area of 20-100 m²/g, optionally 20-50 m²/g.

10. The negative electrode active material according to any one of claims 1 to 9, **characterized in that** the negative electrode active material has a reversible gram capacity of ≥ 355 mAh/g, optionally, the reversible gram capacity being ≥ 360 mAh/g.

11. The negative electrode active material according to any one of claims 1 to 10, **characterized in that** the negative electrode active material has a median particle size by volume Dᵥ50 of 10 µm-30 µm, optionally 15 µm-25 µm.

12. The negative electrode active material according to any one of claims 1 to 11, **characterized in that** the negative electrode active material has a particle size distribution of 0.8 ≤ (Dᵥ90-Dᵥ10)/Dᵥ50 ≤ 1.8, optionally 1.2 ≤ (Dᵥ90-Dᵥ10)/Dᵥ50 ≤ 1.5.

13. The negative electrode active material according to any one of claims 1 to 12, **characterized in that** the negative electrode active material contains a magnetic impurity, and the magnetic impurity comprises at least one of Fe, Ni, Cr, and Zn; and
optionally, a proportion of the magnetic impurity is less than or equal to 1000 ppm.

14. The negative electrode active material according to any one of claims 1 to 13, **characterized in that** the negative electrode active material satisfies any one of the following conditions (1) to (4):
(1) the shell structure is hard carbon and the core structure is soft carbon;
(2) the shell structure is soft carbon and the core structure is hard carbon;
(3) the shell structure is graphite and the core structure is hard carbon; and
(4) the shell structure is hard carbon and the core structure is graphite.

15. A preparation method of negative electrode active material, **characterized by** comprising the following steps:
mixing and calcining a first carbon precursor, a catalyst 1, and a dispersant 1 to obtain a substance A;
mixing and calcining the substance A, a catalyst 2, a dispersant 2, and a second carbon precursor to obtain a substance B; and
performing heat treatment on the substance B to obtain a negative electrode active material;
wherein the negative electrode active material comprises a core structure and a shell structure disposed around surface of the core structure, the core structure and the shell structure both have pores, and an average pore size of pores in the shell structure is greater than an average pore size of pores in the core structure.

16. The preparation method according to claim 15, **characterized in that** the first carbon precursor comprises at least one of coal tar, coal pitch, petroleum residue, and petroleum asphalt.

17. The preparation method according to claim 15 or 16, **characterized in that** the second carbon precursor comprises at least one of water-soluble phenolic resin, glucose, and sucrose.

18. The preparation method according to any one of claims 15 to 17, **characterized in that** the preparation method satisfies at least one of the following conditions (1) to (4):
(1) the catalyst 1 comprises at least one of ferrocene and iron acetylacetonate;
(2) the catalyst 2 comprises at least one of ferric chloride, ferrous chloride, ferric nitrate, ferrous nitrate, ferric sulfate, ferrous sulfate, and ferric citrate;
(3) the dispersant 1 comprises at least one of iso-octane, xylene, ethyl acetate, cyclohexanone, perchloroethylene, tetrahydrofuran, and benzyl alcohol; and
(4) the dispersant 2 comprises at least one of water, ethanol, ethylene glycol, propylene glycol, and glycolic acid.

19. The preparation method according to any one of claims 15 to 18, **characterized in that**:
the catalyst 1 has a particle size of 20 nm-200 nm, optionally 40 nm-100 nm; and/or the catalyst 2 has a particle size of 0.2 µm-2 µm, optionally 0.4 µm-1 µm.

20. The preparation method according to any one of claims 15 to 19, **characterized in that**:
a mass ratio of the first carbon precursor to the second carbon precursor is 9:1-1:1, optionally 9:1-7:3; and/or
a mass ratio of the catalyst 1 to the first carbon precursor is (0.1-1):1, optionally (0.2-0.5):1; and/or
a mass ratio of the catalyst 2 to the second carbon precursor is (0.3-1):1, optionally (0.4-0.7):1.

21. The preparation method according to any one of claims 15 to 20, **characterized in that**:
a mass ratio of the dispersant 1 to the first carbon precursor is (0.5-5): 1, optionally (1-3):1; and/or
a mass ratio of the dispersant 2 to the second carbon precursor is (1-5): 1, optionally (2-4): 1.

22. The preparation method according to any one of claims 15 to 21, **characterized in that**:
in the step of preparing the substance A, a temperature for the calcination is 600-800° C, optionally 700-800° C; and/or
in the step of preparing the substance A, a duration of the calcination is 0.5-5 h, optionally 1 h-2 h.

23. The preparation method according to any one of claims 15 to 22, **characterized in that**:
in the step of preparing the substance B, a temperature for the calcination is 800-1000° C, optionally 800-900° C; and/or
in the step of preparing the substance B, a duration of the calcination is 2-5 h, optionally 2-3 h.

24. The preparation method according to any one of claims 15 to 23, **characterized in that**:
a temperature for the heat treatment is 1800-2800° C, optionally 2000-2500° C; and/or
a duration of the heat treatment is 2-7 days, optionally 3-5 days.

25. The preparation method according to any one of claims 15 to 24, **characterized in that**:
after the substance A is obtained, the substance A is pulverized; and/or
after the substance B is obtained, the substance B is pulverized; and/or
after the negative electrode active material is obtained, sieving is performed.

26. A secondary battery, comprising a negative electrode plate, **characterized in that** the negative electrode plate comprises the negative electrode active material according to any one of claims 1 to 14 or a negative electrode active material obtained using the preparation method according to any one of claims 15 to 25.

27. An electric apparatus, **characterized by** comprising the secondary battery according to claim 26.
